# FASCICULE DE BREVET EUROPEEN

(11) **EP 2 608 213 B1**
(45) Date de publication et mention de la délivrance du brevet: **07.10.2015**
(21) Numéro de dépôt: 13156654.9
(22) Date de dépôt: 18.09.2008
(51) Int. Cl.: G21C 1/09, G21C 13/02, G21D 1/02

(54) **Procédé de remplissage en eau et de vidange en air du circuit primaire principal d'une tranche nucléaire**
Verfahren zum Auffüllen von Wasser und zum Entleeren der Luft des Primärhauptkühlkreises eines Kernkraftwerkblocks
Method for filling with water and bleeding air from the primary coolant circuit of a nuclear plant unit

(30) Priorité: 20.09.2007 FR 0706599
(43) Date de publication de la demande: 26.06.2013
(62) Demande divisionnaire de: 08837749.4
(73) Titulaire: Electricité de France, 75008 Paris (FR)
(72) Inventeur: Demerle, Olivier, 45500 Gien (FR); Mirloup, Francis, 45570 Ouzouer-Sur-Loire (FR); Le Berre, Frédéric, 84500 Bollene (FR); Gitton, Eric, 45570 Ouzouer-Sur-Loire (FR)
(74) Mandataire: Cabinet Plasseraud

(56) Documents cités:
- EP-A- 1 777 709
- FR-A- 2 861 493
- US-A- 4 647 425
- US-A- 5 706 319

## Description

La présente invention porte sur un procédé de remplissage en eau et de vidange en air d'un circuit primaire principal d'une tranche nucléaire, généralement suite à son arrêt pour le renouvellement du combustible, ledit circuit primaire principal comprenant une cuve située dans une piscine d'un bâtiment réacteur, des pompes primaires, au moins un générateur de vapeur comprenant une pluralité de tubes de générateurs de vapeur situés au-dessus du niveau de la cuve, et un pressuriseur.

De manière courante, une tranche nucléaire est composée d'un bâtiment réacteur, constitué d'une enceinte en béton et abritant la cuve du réacteur, qui abrite le coeur du réacteur formé par les assemblages combustibles contenant le combustible nucléaire, ainsi que les principaux composants nucléaires de la tranche. Il est ainsi prévu, dans le bâtiment réacteur, un circuit primaire principal dans lequel l'eau est chauffée au contact des assemblages combustibles, est pressurisée par un pressuriseur afin d'empêcher qu'elle ne bouille et circule dans ce circuit fermé. Au moins un générateur de vapeur est également prévu dans le circuit primaire afin de recevoir l'eau chaude circulant dans ce circuit primaire dans des tubes en épingles en formes de U inversé, ce qui permet de chauffer l'eau d'un circuit secondaire et de la transformer en vapeur.

Chacune des tranches d'une centrale nucléaire doit être arrêtée périodiquement pour des opérations de maintenance et de rechargement du combustible nucléaire.

Sur certains sites nucléaires (notoirement sur les sites du demandeur), un remplissage en eau des tubes des épingles GV est effectué par un procédé dit de « mise sous vide », créant le remplissage par un phénomène d'aspiration détaillé plus loin. Ce procédé de mise sous vide qui s'effectue lors du redémarrage de la tranche nucléaire suite à un arrêt n'est pas effectué sur la plupart des sites mondiaux, ou les tubes en épingles sont alors simplement remplis en eau au moment du démarrage des pompes primaires. L'air ainsi chassé s'accumule dans les points hauts, comme le couvercle de la cuve, qui sont alors éventés. Pour des raisons de conception, les tubes en U inversé sont situés au dessus du niveau de la cuve et constituent des points hauts qui ne peuvent pas être éventés. Le procédé consistant à chasser l'air des épingles GV par démarrage des pompes primaires puis à éventer après arrêt de celles-ci est communément appelé « éventage dynamique ».

Selon les procédures accidentelles dont sont équipés certains sites nucléaires en cas de brèche du circuit primaire principal, mais également pour des raisons de chimie, il est nécessaire d'éliminer l'air contenu dans le circuit primaire principal avant de démarrer l'installation. Ceci est déterminant pour les sites qui utilisent une instrumentation de mesure de niveau d'eau dans la cuve, car cela conditionne la disponibilité de ce système de mesure.

Le document US 5 706 319 décrit l'utilisation d'un faux couvercle amovible pour fermer la cuve et permettre la vidange d'un réacteur à eau pressurisée du type PWR.

Le document US 4 547 425 décrit quant à lui un procédé utilisant des pompes à vide pour dégazer et remplir un système de refroidissement du réacteur du type RCS après une mise en arrêt du RCS.

Afin de permettre le redémarrage du circuit primaire principal sans air, il a été mis en oeuvre un procédé de remplissage en eau et de vidange en air du circuit primaire principal d'une tranche nucléaire suite à son arrêt pour le renouvellement du combustible. Toutefois, lors de la réalisation de ce procédé, il est nécessaire de passer par une étape de mise sous vide du circuit primaire principal avec du combustible nucléaire dans la cuve. De ce fait, il est donc obligatoire de respecter un mode opératoire complexe que les règles de sûreté nucléaire rendent coûteux en temps de gestion et qui allonge la durée de l'arrêt de l'installation.

Il est donc particulièrement intéressant de réaliser un procédé de vidange en air et de remplissage en eau d'un circuit primaire principal d'une tranche nucléaire en vue de son redémarrage qui soit simplifié tout en minimisant les coûts et respectant les règles de sûreté nucléaire.

La présente invention porte donc sur un procédé de remplissage en eau et due vidange en air d'un circuit primaire principal d'une tranche nucléaire suite à son arrêt pour le renouvellement du combustible, ledit circuit primaire principal comprenant une cuve située dans une piscine d'un bâtiment réacteur, des pompes primaires, au moins un générateur de vapeur comprenant une pluralité de tubes de générateurs de vapeur situés au-dessus du niveau de la cuve, et un pressuriseur, le procédé comprenant les étapes de :
**a)** remplissage de la cuve et de la piscine en eau ;
**b)** chargement de la cuve en combustible nucléaire ;
**c)** vidange de la piscine et pose d'un couvercle fermant la cuve ;
**d)** ajustement du niveau d'eau du circuit primaire principal à une plage de travail basse pour mettre en communication les volumes d'air contenus dans les tubes, le pressuriseur et la cuve ;
**e)** mise sous vide du circuit primaire principal par aspiration de pompes à vide reliées à des évents de la cuve et le pressuriseur ;
**f)** remplissage du circuit primaire principal jusqu'à un niveau de mise sous vide puis mise à la pression atmosphérique du circuit primaire principal par ouverture des évents, ce grâce à quoi l'eau du circuit primaire principal est aspirée dans les tubes ;
**g)** remplissage du circuit primaire jusqu'au sommet du pressuriseur pour permettre la poursuite des opérations de démarrage de la tranche nucléaire ;
le procédé étant caractérisé en ce que les étapes d), e) et f) sont réalisées avant la succession des étapes a), b), c).

Ainsi, grâce au procédé selon l'invention, le remplissage en eau des tubes par mise sous vide est effectué avant le chargement du combustible.

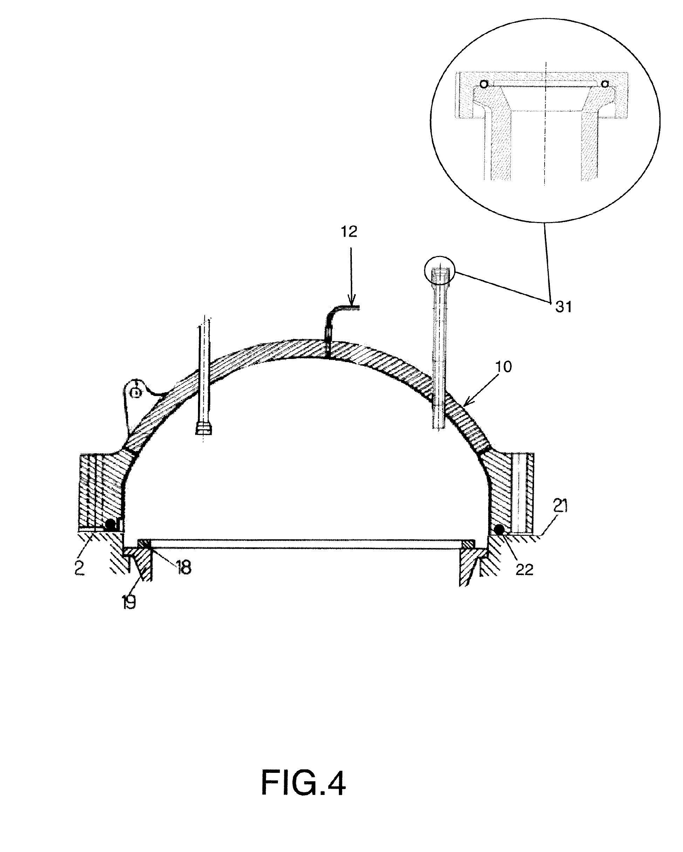

Toutefois, même si le procédé permet de simplifier la procédure de remplissage en eau et de vidange en air du circuit primaire principal, il est nécessaire de manoeuvrer le couvercle de la cuve, qui pèse plus de 110 tonnes, qu'il faut poser pour étancher momentanément le circuit primaire principal, puis déposer en fin de mise sous vide pour remplir la piscine. Pour étancher le couvercle de cuve lui-même, un joint est à mettre en place dans sa liaison avec la cuve, comme on le verra plus loin en référence à la figure 4 (référence 22), ainsi que des obturateurs sur les pénétrations supérieures dans le couvercle pour la sortie d'instrumentation du cour (référence 31 de la figure 4). Ce procédé entraîne un accroissement de la dosimétrie du personnel du fait de la manoeuvre du couvercle. De plus, il présente encore un coût important de main d'oeuvre pour la manutention du couvercle, la manoeuvre de ce couvercle allongeant la durée de l'arrêt de la tranche.

Le couvercle de cuve lui-même peut être utilisé malgré son poids, pour étancher la cuve, à condition de mettre en oeuvre les moyens d'étanchéité adaptés.

Ainsi, toujours afin de réduire le temps d'arrêt de la tranche et diminuer les coûts, le procédé selon l'invention comprend, avant l'étape d), une étape de pose d'un couvercle, du type faux couvercle, fermant la cuve et une étape d'étanchéification de ce faux couvercle dans sa liaison avec la cuve à l'aide de moyens d'étanchéité.

En effet, de manière courante, il est utilisé dans les tranches nucléaires un couvercle, du type faux couvercle, qui est mis en place sur la cuve du réacteur lorsqu'elle est vide afin d'assurer une protection biologique des intervenants à proximité de la cuve, de réaliser un confinement dynamique des circuits lors des opérations de maintenance, de protéger le circuit primaire contre l'intrusion de corps étrangers, de permettre l'accès pour le contrôle des taraudages cuve, de nettoyer et expertiser la portée du plan de joint cuve, de décontaminer la piscine réacteur sans introduire d'eau claire dans le circuit primaire et de recouvrir les éléments internes supérieurs de la cuve lors de l'épreuve enceinte décennale. Ainsi, selon l'invention, il est utilisé comme couvercle un tel faux couvercle, déjà en place avant la mise en oeuvre du procédé, qui comprend des moyens d'étanchéité supplémentaires.

Le procédé peut comprendre, après l'étape f), une étape de dépose desdits moyens d'étanchéité du couvercle, du type faux couvercle.

De manière avantageuse, il peut être prévu l'utilisation d'une bride pouvant être mobile comme moyens d'étanchéité du couvercle, du type faux couvercle, avec la cuve.

La présente invention est maintenant décrite à l'aide d'un exemple uniquement illustratif et nullement limitatif de la portée de l'invention, et à partir des illustrations suivantes, dans lesquelles :
- la figure 1 représente une vue schématique d'un circuit primaire principal d'une tranche nucléaire,
- la figure 2 représente une vue en coupe schématique d'un couvercle, du type faux couvercle, et d'une bride mobile pour la mise en oeuvre du procédé selon l'invention,
- la figure 3 représente une vue en coupe schématique d'un couvercle plus simple, du type faux couvercle, constituant une bride fixe, selon une variante de la figure 2,
- la figure 4 représente un couvercle de cuve classique, mais équipé de moyens d'étanchéité adaptés, permettant la mise en oeuvre du procédé.

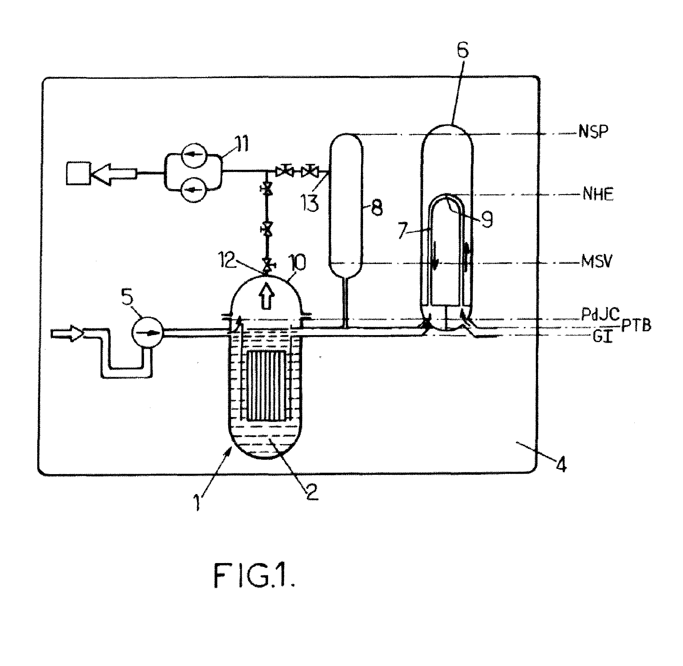

La figure 1 représente donc une vue schématique d'un circuit primaire principal 1 d'une tranche nucléaire comprenant une cuve 2 située dans une piscine (non représentée sur les figures, mais de type connu en soi) d'un bâtiment réacteur 4, et des pompes primaires 5, aptes à faire circuler l'eau dans le circuit primaire principal 1.

Le circuit 1 comprend également au moins un générateur de vapeur 6 comprenant une pluralité de tubes 7 de générateurs de vapeur situés au-dessus du niveau de la cuve 2, et un pressuriseur 8. Les tubes 7 sont de forme générale en U inversé et présentent chacun un point haut 9 (qui correspond au niveau haut de l'épingle de ce tube 7 situé au niveau NHE sur la figure 1), qui est difficilement éventable.

De manière courante, afin de remplir en eau et de vidanger en air un circuit primaire principal, il est procédé aux étapes de :
a) remplissage de la cuve 2 et de la piscine en eau. Avantageusement, la cuve 2 sert lors de cette étape de moyen de remplissage de la piscine au fond de laquelle elle est située. L'air contenu dans les tubes 7 partiellement remplis d'eau est alors compressé dans les parties en épingles 9 des tubes 7 ;
**b)** chargement de la cuve 2 en combustible nucléaire ;
**c)** vidange de la piscine et pose d'un couvercle 10 fermant la cuve 2. Le niveau d'eau se trouve alors au plan de joint cuve de référence PdJC sur la figure 1 ;
**d)** ajustement du niveau d'eau du circuit primaire principal à une plage de travail basse (de référence PTB sur la figure 1) pour mettre en communication les volumes d'air contenus dans les tubes 7, le pressuriseur 8 et la cuve 2;
**e)** mise sous vide du circuit primaire principal par aspiration de pompes à vide 11 reliées à des évents 12, 13 de la cuve 2 et du pressuriseur 8. Cette étape génère une dépression de 800mbar par rapport à l'extérieur du circuit situé à la pression atmosphérique ;
**f)** remplissage du circuit primaire principal jusqu'à un niveau de mise sous vide (de référence MSV sur la figure 1) puis mise à la pression atmosphérique du circuit primaire principal par ouverture des évents 12, 13, ce grâce à quoi l'eau du circuit primaire principal est aspirée dans les tubes 7 ;
**g)** remplissage du circuit primaire principal 1 jusqu'au sommet du pressuriseur 8 pour permettre la poursuite des opérations de démarrage de la tranche nucléaire.

Selon l'invention, les étapes d), e) et f) sont réalisées avant la succession des étapes a), b), c). Ainsi, lors de l'étape a), la quantité d'air dans les tubes est considérablement moindre, du fait que les tubes 7 ont déjà été remplis lors des étapes d), e) et f). Ainsi, selon l'invention, il est procédé successivement aux étapes d), e), f), a), b), c), et g).

Toutefois, à partir de ce procédé, il est nécessaire de poser le couvercle 10 de la cuve avant l'étape d), équipé du joint 22 et des obturateurs 31, afin d'étancher momentanément le circuit primaire principal 1, puis le déposer en fin de mise sous vide pour remplir la piscine, pour par la suite le reposer lors de l'étape c). Il y a donc une double manipulation du couvercle 10 qu'il conviendrait d'éviter, car ce couvercle 10, qui pèse plus de 110 tonnes, est difficile à manoeuvrer et l'activité est chronophage.

Ainsi, selon l'invention, il est proposé d'utiliser un couvercle, du type faux couvercle 14, qui est mis en place sur la cuve 2 du réacteur avec des moyens d'étanchéité 15 permettant ainsi d'étanchéifier la cuve 2 sur laquelle il est placé.

Le couvercle, du type faux couvercle 14, est un équipement qui est utilisé comme couvercle d'une cuve 2 de réacteur nucléaire lorsque la tranche est à l'arrêt. Il possède un revêtement ou est constitué d'une matière décontaminable.

De manière courante, un couvercle, de type faux couvercle 14, est utilisé pour assurer une protection biologique des intervenants à proximité des piscines, mettre le circuit primaire principal en dépression dynamique lors des opérations de maintenance, protéger le circuit primaire contre l'intrusion de corps étrangers, utiliser la machine de contrôle des taraudages cuve (machine de type connu en soi) avec le faux couvercle 14 en place, nettoyer et expertiser la portée du plan de joint cuve (ou PdJC), décontaminer la piscine du réacteur, recouvrir éventuellement les éléments internes supérieurs de la cuve lors de l'épreuve enceinte décennale, accéder éventuellement aux bouchons d'irradiation et ne pas abîmer les tubes d'ajutage à la pose du faux couvercle.

Ainsi, le procédé selon l'invention comprend donc, avant l'étape d), une étape de pose d'un couvercle, du type faux couvercle 14, fermant la cuve 2 et une étape d'étanchéification de ce couvercle, du type faux couvercle 14, dans sa liaison avec la cuve 2 à l'aide des moyens d'étanchéité 15 et après l'étape f), une étape de dépose du couvercle, du type faux couvercle 14.

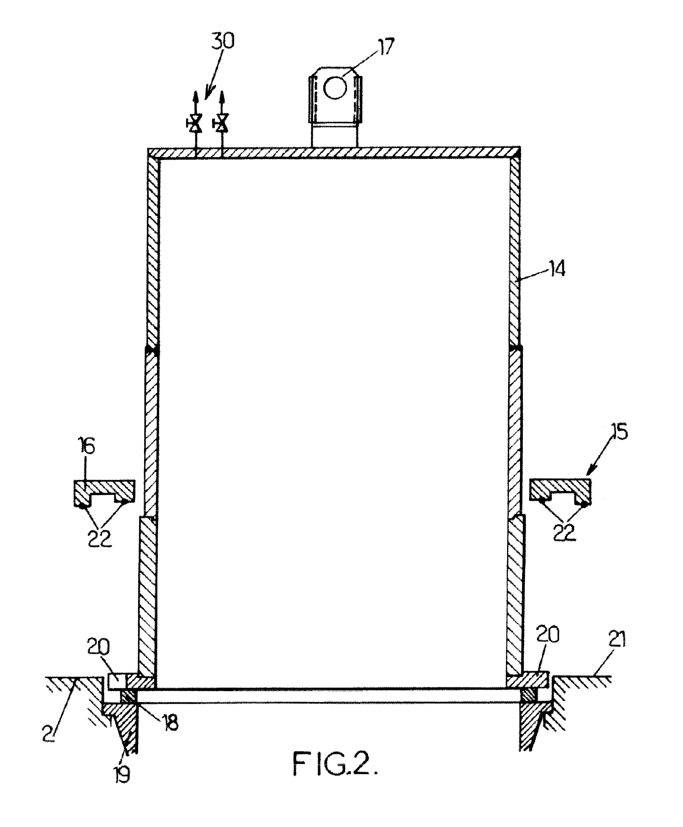

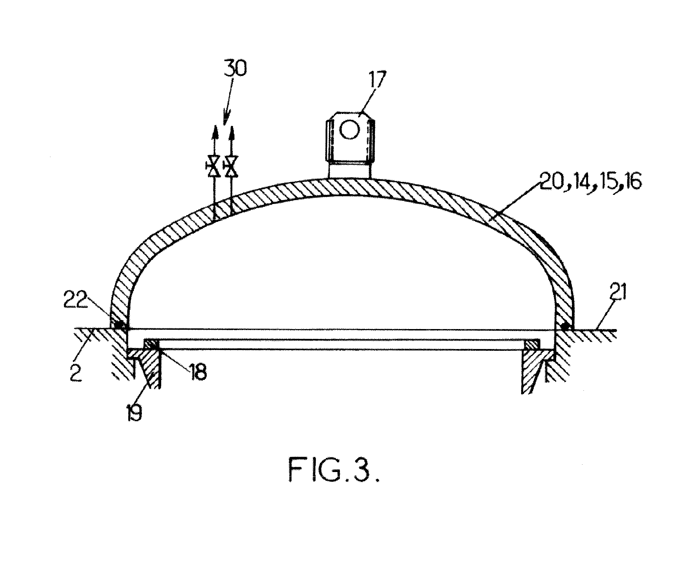

Préférentiellement, il est prévu l'utilisation d'une bride 16 (pouvant être mobile (figure 2) ou fixe (figure 3)) comme moyens d'étanchéité 15 du couvercle, du type faux couvercle 14, avec la cuve 2.

En ajoutant une étape d'étanchéification du couvercle, du type faux couvercle 14, il est ainsi évité toute étape de manutention d'un couvercle, lors du procédé selon l'invention de remplissage en eau et de vidange en air.

La figure 2 représente une vue en coupe schématique d'un couvercle, du type faux couvercle 14, sur lequel est destiné à se solidariser de manière étanche la bride mobile 16.

Il est ainsi représenté un couvercle, du type faux couvercle 14, comprenant un anneau de levage 17. Le faux couvercle 14 repose sur un anneau de calage 18 posé en périphérie de l'enveloppe 19 du coeur du réacteur situé par conception à l'intérieur de la cuve 2.

La bride 16 peut être soit directement intégrée dans le faux couvercle 14, soit être prévue amovible de celui-ci (comme cela est représenté sur la figure 2). Dans tous les cas, la bride 16 doit permettre l'étanchéité requise entre la collerette 20 du faux couvercle 14 et le plan de joint cuve (ou PdJC), c'est-à-dire la surface supérieure 21 de la cuve 2.

Préférentiellement, si la bride d'étanchéité 16 est mobile, sa manoeuvre de mise en contact sur la cuve 2 est assurée par un dispositif intégré sans moyen de manutention externe (tel qu'un pont) et est aisée de manière à minimiser les durées de sollicitation du personnel et son exposition aux rayonnements. De plus, le maintien de cette bride 16 mobile en position haute est garanti sans risque de chute pour éviter tout risque d'accident corporel ou de détérioration du plan de joint cuve 21.

Le poids total de l'ensemble boîte de stockage et faux couvercle 14 doit rester compatible avec les moyens de levage disponibles sur le site. Sur les sites sur lesquels il est utilisé, le couvercle, du type faux couvercle 14, est considérablement moins lourd que le couvercle 10, ce qui rend sa manutention plus aisée que celle du couvercle 10 usuel de la cuve 2 qui pèse plus de 110 tonnes.

De manière générale, le faux couvercle 14 doit être parfaitement étanche pour permettre la réalisation du procédé selon l'invention.

Il est également prévu une peau en acier inoxydable revêtue sur toutes les parties du couvercle, du type faux couvercle 14, en contact avec les équipements du circuit primaire 1.

Le couvercle, du type faux couvercle 14, est avantageusement paramétré pour pouvoir supporter un remplissage en eau borée jusqu'au niveau MSV, lorsqu'il est en dépression de 800mbar par rapport à la pression atmosphérique. A cet effet, la partie mouillée du couvercle, du type faux couvercle 14, ne doit pas présenter de risques de corrosion sous acide borique.

Avantageusement, le couvercle, du type faux couvercle 14, est équipé de deux brides supplémentaires en partie supérieure pour brancher le flexible de mise sous vide (pour l'aspiration par les pompes à vide 11) et connecter le tubing de la mesure de niveau d'eau dans la cuve 2 à l'aide d'un flexible. La hauteur de ces branchements est située à une altitude supérieure au niveau MSV sur le couvercle, du type faux couvercle 14. La conception du système d'étanchéité prévoit un maintien de la fonction d'étanchéité en cas de variation d'altitude du couvercle, du type faux couvercle, sous l'influence de la pression atmosphérique extérieure exercée sur celui-ci pour un déplacement vertical de quelques millimètres du fait de la flexibilité de l'anneau de calage 18.

La bride 16 doit être posée, par exemple par simple contact, sur la cuve 2 avant l'étape de dépression par aspiration des tubes 7, ce qui pressera la bride 16 sur la cuve 2 et le couvercle, du type faux couvercle 14.

La forme de la bride 16 épouse avantageusement les profils de la cuve 2 et du faux couvercle 14 au niveau de leur assemblage. Par exemple, une partie de la bride 16 prend appui sur la collerette 20 du faux couvercle 14 tandis qu'une autre partie de la bride 16 prend appui sur la surface supérieure 21 de la cuve 2.

Tout moyen permettant de maintenir la bride 16 solidarisée du faux couvercle 14 et de la cuve 2 est avantageusement utilisé (si celle-ci est mobile), par exemple par des moyens de clipsage ou vissage, de sorte que la bride 16 ne soit pas soulevée par une poussée verticale ou par un dysfonctionnement lors des opérations.

L'étanchéité est assurée de manière physique par un ou plusieurs joints 22 disposés sur les formes prévues sur la bride 16. Les joints 22 utilisés peuvent être de base polymère, graphite, fibre naturelle sous formes solides (tels que tresses pour garnitures, feuilles, papiers, matières fibreuses pour joints plats prêts à l'emploi ou à découper, joints toriques ou à lèvres) ou pâteuses ou liquides (pâte à joint, mastics et joints liquides).

Par ailleurs, du fait que la bride 16 ne doit pas désactiver les fonctions premières du faux couvercle 14, la bride 16 est prévue mobile afin d'être relevable à une altitude minimale permettant dans cette position une exploitation des outils habituellement utilisés à proximité du plan de joint de cuve (PdJC), par exemple de manière à permettre le passage d'une machine de contrôle des taraudages cuve, machine de type connu en soi. A titre d'exemple du gabarit de la machine de contrôle des taraudages cuve, celle-ci a une hauteur de 1100mm et présente des roues latérales qui prennent appui sur le plan de joint cuve sur une largeur de 52mm.

On a représenté aussi sur la figure 2 des piquages de raccordement 30, pour des mesures de niveau et pour le flexible de mise sous vide.

Le mode de réalisation de la figure 2 se rattache alors à une réalisation dans laquelle la bride est avantageusement mobile. Toutefois, dans une variante représentée sur la figure 3, la bride peut être fixe comme illustré au niveau de la référence 22 de cette figure 3. Les éléments similaires des figures 2 et 3 portent les mêmes références. L'utilisation d'un tel équipement, illustré sur la figure 3, ne permet cependant pas de remplir toutes les fonctions de l'équipement décrit dans la figure 2 (notamment recouvrir les éléments internes supérieurs de la cuve pendant l'arrêt).

Ainsi, l'invention consiste à ajouter aux fonctions du faux couvercle 14, d'un type connu en soi, la possibilité de mettre en dépression le circuit primaire principal 1 de 800mbar par rapport à l'extérieur (qui est à la pression atmosphérique), ce qui nécessite l'installation de moyens d'étanchéité. De manière supplémentaire, il est également prévu des branchements supplémentaires du flexible de mise sous vide ainsi que celui de la mesure du niveau d'eau dans la cuve.

La présente invention permet d'augmenter le niveau de sûreté d'exploitation du fait de la suppression du transitoire à faible niveau d'eau dans le circuit primaire principal 1 alors qu'il y a du combustible dans la cuve 2. Elle permet également de supprimer l'opération « d'éventage dynamique » lorsqu'elle est prévue, opération plus longue que la mise en oeuvre du procédé, et donc un gain sur la durée d'arrêt de l'installation.

Il pourrait aussi être prévu de poser directement le vrai couvercle sur la cuve comme l'illustre la figure 4 pour pouvoir réaliser un procédé similaire. Cependant, le procédé général au sens de l'invention est effectué avec un faux couvercle comme décrit ci-avant. Dans le cas d'une mise en oeuvre avec le vrai couvercle, le joint 22, par exemple de type élastomère, est mis en place dans la gorge du couvercle. Des obturateurs simples 31 sont préférentiellement utilisés pour étancher les pénétrations dans le couvercle, supérieures, de sortie d'instrumentation du coeur, comme illustré en figure 4.

## Revendications

1. Procédé de remplissage en eau et de vidange en air d'un circuit primaire principal (1) d'une tranche nucléaire suite à son arrêt, ledit circuit primaire principal (1) comprenant une cuve (2) située dans une piscine d'un bâtiment réacteur (4), des pompes primaires (5), au moins un générateur de vapeur (6) comprenant une pluralité de tubes de générateurs de vapeur (7) situés au-dessus du niveau de la cuve (2), et un pressuriseur (8),
le procédé comprenant la succession des étapes suivantes :
- une première pose d'un couvercle du type faux couvercle (14)) fermant la cuve (2) et une étanchéification dudit couvercle (14) dans sa liaison avec la cuve (2) à l'aide de moyens d'étanchéité (15) ;
- un ajustement du niveau d'eau du circuit primaire principal (1) à une plage de travail basse (PTB) pour mettre en communication les volumes d'air contenus dans les tubes (7), le pressuriseur (8) et la cuve (2) ;
- une mise sous vide du circuit primaire principal (1) par aspiration de pompes à vide (11) reliées à des évents (12, 13) de la cuve (2) et le pressuriseur (8) ;
- un remplissage du circuit primaire principal (1) jusqu'à un niveau de mise sous vide (MSV), puis une mise à la pression atmosphérique du circuit primaire principal (1) par ouverture des évents (12, 13), ce grâce à quoi l'eau du circuit primaire principal (1) est aspirée dans les tubes (7) ;
- une dépose du couvercle (14) et des moyens d'étanchéité (15) ;
- un remplissage en eau de la cuve (2) et de la piscine ;
- un chargement de la cuve (2) en combustible nucléaire ;
- une vidange de la piscine et une deuxième pose du couvercle (14) fermant la cuve (2) ; puis
- un remplissage du circuit primaire principal (1) jusqu'au sommet du pressuriseur (8) pour permettre la poursuite des opérations de démarrage de la tranche nucléaire.

2. Procédé selon la revendication 1, **caractérisé en ce qu'**il est prévu l'utilisation d'une bride (16) comme moyens d'étanchéité (15) du couvercle (14) sur la cuve (2).

## Patentansprüche

1. Verfahren zum Auffüllen mit Wasser und zum Entleeren von Luft eines Haupt-Primärkreislaufs (1) eines Kernkraftblocks im Anschluss an sein Herunterfahren, wobei der Haupt-Primärkreislauf (1) einen Tank (2), der in einem Becken eines Reaktorgebäudes (4) angeordnet ist, Primärpumpen (5), mindestens einen Dampferzeuger (6), der eine Mehrzahl von oberhalb des Niveaus des Tanks (2) angeordneten Dampferzeugerrohren (7) umfasst, und einen Druckhalter (8) umfasst,
wobei das Verfahren die Abfolge der folgenden Schritte umfasst:
- Ein erstes Anbringen einer Abdeckung vom Typ einer Blindabdeckung (14), die den Tank (2) schließt, und ein Abdichten der Abdeckung (14) in ihrer Verbindung mit dem Tank mittels Dichtmitteln (15);
- ein Einstellen des Wasserstands des Haupt-Primärkreislaufs (1) auf einen niedrigen Arbeitsbereich (PTB), um die in den Rohren (7) enthaltenen Luftvolumina, den Druckhalter (8) und den Tank (2) in Verbindung zu setzen;
- eine Evakuierung des Haupt-Primärkreislaufs (1) durch Saugen von Vakuumpumpen (11), die mit Luftöffnungen (12, 13) des Tanks (2) und des Druckhalters (8) verbunden sind;
- ein Befüllen des Haupt-Primärkreislaufs (1) bis auf ein Evakuierungsniveau (MSV), anschließend ein atmosphärischer Druckausgleich des Haupt-Primärkreislaufs (1) durch Öffnen der Luftöffnungen (12, 13), wodurch das Wasser des Haupt-Primärkreislaufs (1) in die Rohre (7) gesaugt wird;
- ein Entfernen der Abdeckung (14) und der Dichtmittel (15) ;
- ein Befüllen des Tanks (2) und des Beckens mit Wasser;
- ein Bestücken des Tanks (2) mit Kernbrennstoff;
- ein Entleeren des Beckens und ein zweites Anbringen der Abdeckung (14), die den Tank (2) schließt; anschließend
- ein Befüllen des Haupt-Primärkreislaufs (1) bis zum oberen Bereich des Druckhalters (8), um die Fortsetzung der Operationen zum Anfahren des Kernkraftblocks zu ermöglichen.

2. Verfahren nach Anspruch 1, **dadurch gekennzeichnet, dass** die Verwendung eines Flansches (16) als Dichtmittel (15) der Abdeckung (14) an dem Tank (2) vorgesehen ist.

## Claims

1. Method for filling a main primary coolant system (1) of a nuclear power plant with water and for draining it of air after said plant has been shut down, said main primary coolant system (1) comprising a reactor vessel (2) located in a pool of a reactor building (4), primary coolant pumps (5), at least one steam generator (6) comprising a plurality of steam generator tubes (7) that are located above the level of the reactor vessel (2), and a pressurizer (8), the method comprising the following steps:
- a first putting into position of a head (14) closing the reactor vessel (2), the head being of a false head type, and a sealing of said head (14) where it joins the reactor vessel using sealing means;
- an adjustment of the water level of the main primary coolant system to a low working range (PTB) in order to bring the volumes of air contained in the tubes (7), in the pressurizer (8) and in the reactor vessel (2) into communication with one another;
- a vacuum setting of the main primary coolant system (1) by the suction of vacuum pumps (11) connected to vents on the reactor vessel (2) and on the pressurizer (8);
- a filing up of the main primary coolant system (1) to a vacuum level (MSV) to a vacuum level and then brought to the atmospheric pressure of the main primary coolant system (1) by opening vents (12, 13), by virtue of which the water of the main primary coolant system (1) is drained into the tubes (7) and then brought to the atmospheric pressure of the main primary coolant system (1) by opening the vents, by virtue of which the water of the main primary coolant system (1) is drained into the tubes (7);
- a putting out of position of the head (14) and the sealing means (15);
- a filling of the reactor vessel (2) and the pool with water;
- a load of the reactor vessel (2) with nuclear fuel;
- a draining of the pool and second putting of the head (14) into position for closing off the reactor vessel (2) is put into position; then
- a filling up of the main primary coolant system (1) to the top of the pressurizer (8) so as to allow the nuclear power plant startup operations to continue,

2. The method as claimed in claim 1, **characterized in that** it provides for a flange (16) to be used as means (15) for sealing the head (14) onto the reactor vessel (2).
